# EUROPEAN PATENT SPECIFICATION

(11) **EP 2 835 183 B1**
(45) Date of publication and mention of the grant of the patent: **25.05.2016**
(21) Application number: 14179455.2
(22) Date of filing: 01.08.2014
(51) Int. Cl.: B07B 1/30, B07B 1/40, B65G 27/08

(54) **VIBRATING PLATE**
VIBRIERENDE PLATTE
PLATEAU VIBRANT

(30) Priority: 06.08.2013 IT VR20130188
(43) Date of publication of application: 11.02.2015
(73) Proprietor: Ferrari, Luigi Alberto, 25037 Pontoglio (BS) (IT); Ferrari, Giuseppe Eugenio, 25037 Pontoglio (BS) (IT)
(72) Inventor: Ferrari, Luigi Alberto, 25037 Pontoglio (BS) (IT); Ferrari, Giuseppe Eugenio, 25037 Pontoglio (BS) (IT)
(74) Representative: Modiano, Micaela Nadia

(56) References cited:
- GB-A- 527 082
- GB-A- 870 719
- GB-A- 1 604 297
- US-A- 2 042 072
- US-A- 2 116 225
- US-A- 2 334 368

## Description

The present invention relates to a vibrating plate for providing trays, for example for transport, drying, roasting of cereal seeds or screening trays or the like.

Vibrating plates, constituted by a rectangular or square frame that supports one or more flat platelike bodies and is subjected to a vibration with a vertical component and horizontal component, are known and used extensively, for example to provide apparatuses of the type described above.

The vibrating motion of the platelike body is obtained by using various types of vibrating mechanisms, both mechanical (with eccentric masses, with an eccentric shaft, etc.) and electromagnetic.

Typically, helical springs or leaf springs are interposed between the frame and the platelike body and, as a consequence of the action of the vibrating mechanism, produce a vibration of the platelike body that has a horizontal component and a vertical component.

Vibrating tables with single vibration and with dual vibration are currently commercially known.

Vibrating tables with single vibration can use a unidirectional vibration method by using two motorized vibrators that allow to move the product in a linear manner and without bouncing or a rotational vibration method by using a motorized vibrator that is adapted to move the product by subjecting it to a rotation and a revolution about itself.

As regards the rotational vibration method, it is noted that it requires an inclination of the vibrating table at an angle comprised between 10° and 25°.

As noted above, vibrating tables with dual vibration are also known which can be divided into two mutually perpendicular components.

The two components can be configured in a different manner according to the requirements.

In order to modify the characteristics of the vibration, it is necessary to modify the resonance frequency of the springs.

By way of example, for a vibrating table to be used for roasting, drying or screening (in which the product requires slow movements but high bounces), one has a low resonance frequency for the horizontal leaf springs and a high resonance frequency for the vertical leaf springs, so as to impart to the product a slow movement with high bounces and rotation in order to achieve effective roasting on the entire surface of the product.

If instead one intends to use the vibrating table only to transport the product, one has a high resonance frequency for the horizontal leaf springs and a low resonance frequency for the vertical leaf springs.

Although known solutions are valid from a conceptual standpoint, they are however not devoid of drawbacks.

In particular, in vibrating tables used for screening and with single vibration, the products are often jammed in the screening mesh, with a consequent reduction in efficiency.

Again with reference to vibrating tables with single vibration for roasting or drying, it is noted that these operations do not occur uniformly on the entire surface of the products.

With reference to vibrating tables with dual vibration, the greatest problems are encountered in the configuration of the springs, which, being distinct, are extremely difficult to adjust.

US 2 042 072 A discloses a vibratory screen wherein uniform orbital paths of motion in planes at right angles to the screening surface are simultaneously imported to the latter.

The aim of the present invention is to provide a vibrating plate that is capable of reducing or at least limiting drastically the drawbacks noted above.

Within this aim, an object of the present invention is to provide a vibrating plate that is extremely practical to use.

This aim and this and other objects that will become better apparent hereinafter are achieved by a vibrating plate according to the provisions of claim 1.

Further characteristics and advantages of the invention will become better apparent from the description of some preferred but not exclusive embodiments of a vibrating plate, illustrated by way of nonlimiting example in the accompanying drawings, wherein:

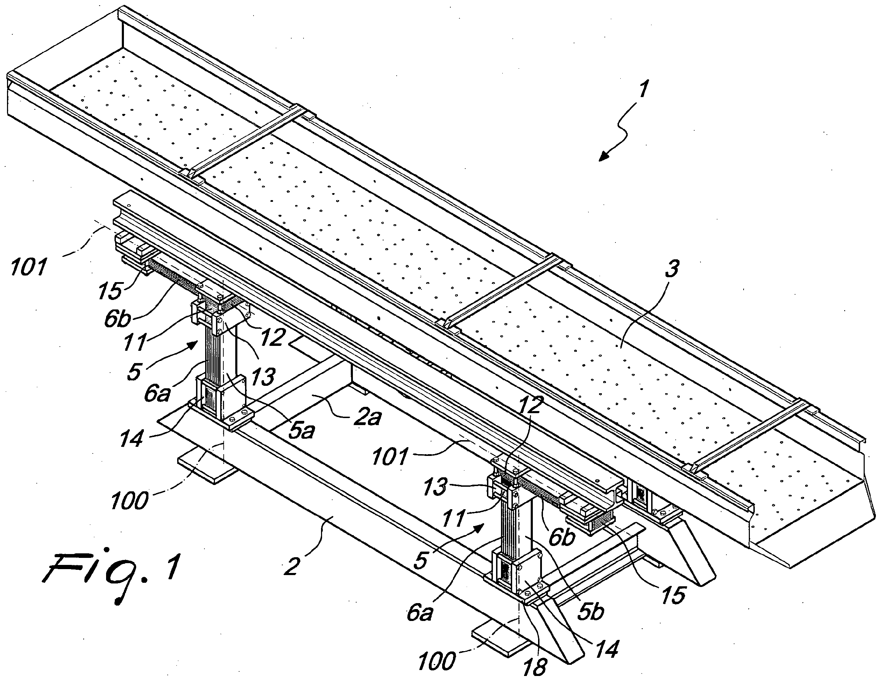

Figure 1 is a perspective view of a vibrating plate according to the invention;

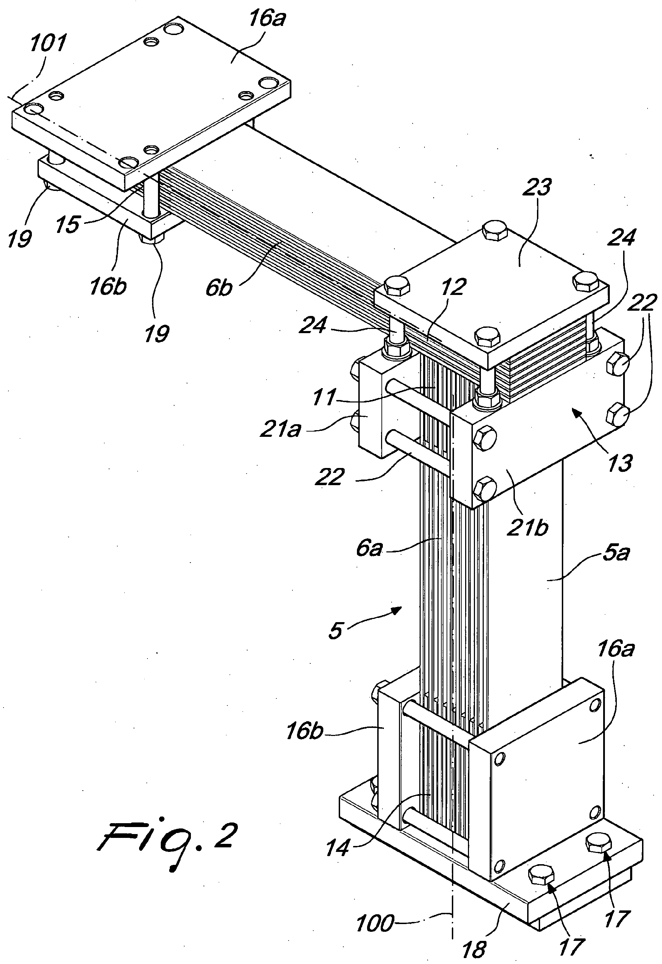

Figure 2 is another perspective view, in enlarged scale, of a suspension of a vibrating plate according to the invention;

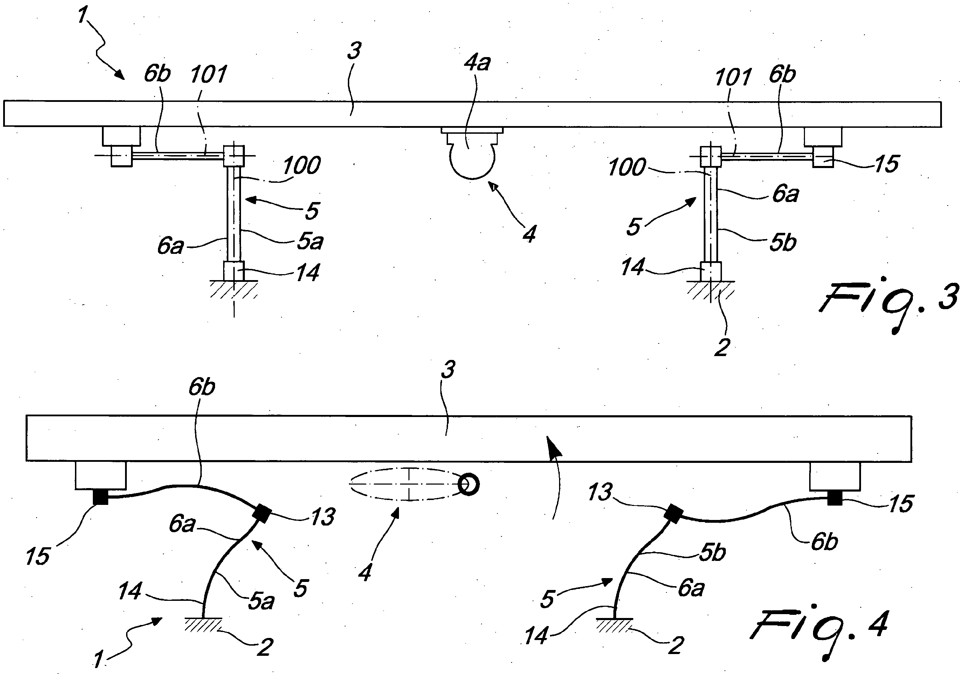

Figure 3 is a schematic side elevation view of a vibrating plate;
Figure 4 is a view, similar to the preceding one, showing the mechanical elements that constitute the vibrating plate, which are deformed as a consequence of the stresses produced by the vibrating assembly;
Figure 5 is a schematic side elevation view of a constructive variation of a vibrating plate;
Figure 6a is a view, similar to the preceding one, of the mechanical elements that constitute the vibrating plate, which are deformed as a consequence of the stresses produced by the vibrating assembly with the mass in the 0° position;
Figure 6b is a view, similar to the preceding one, of the vibrating assembly with the mass of the vibrating assembly in the 90° position;
Figure 6c is a view, similar to the preceding one, of the vibrating assembly with the mass of the vibrating assembly in the 180° position;
Figure 6d is a view, similar to the preceding one, of the vibrating assembly with the mass of the vibrating assembly in the 270° position.

In the examples of embodiments that follow, individual characteristics, given in relation to specific examples, may actually be interchanged with other different characteristics that exist in other examples of embodiment.

With reference to the figures cited above, the present invention relates to a vibrating plate, generally designated by the reference numeral 1.

The vibrating plate 1 can be used to provide a transport tray, a drying tray, a roasting tray, a screening tray or similar apparatuses.

The vibrating plate 1 comprises a fixed frame 2 that supports at least one platelike body 3 and is associated with a vibrating assembly 4.

In the case of transport trays, the platelike body 3 can be constituted by a metal sheet without holes; in the case of a drying tray, it can be constituted by a perforated metal plate with a low ratio between void and solid; in the case of a roasting tray, it can be constituted by a perforated metal plate with a very low ratio between void and solid; and in the case of a screening tray, it can be constituted by a perforated metal plate or mesh with a very high ratio between void and solid.

By way of example, the fixed frame 2 can be constituted by a footing 2a that is intended to rest on a surface or floor.

A suspension device 5 which comprises at least two suspensions 5a, 5b is arranged between the fixed frame 2 and the platelike body or bodies 3.

According to the present invention, the two or more suspensions 5a, 5b comprise respectively a first leaf spring 6a that is extended along a first direction of extension 100 and a second leaf spring 6b that is extended along a second direction of extension 101 that is substantially perpendicular to the first direction of extension 100.

The first leaf spring 6a and the second leaf spring 6b are mutually connected directly and rigidly to each other.

Moreover, the first leaf spring 6a and the second leaf spring 5b are connected respectively to the fixed frame 2 and to the platelike body 3.

The expression "directly connected" is understood to mean that they are connected without the interposition of any movable frame.

The vibrating motion of the platelike body 3 is obtained by using different types of vibrating mechanisms, both mechanical (with eccentric masses, with eccentric shaft, etc.) and electromagnetic.

Advantageously, the first leaf spring 6a has a first connection region 11, which is connected to a second connection region 12 defined on the second leaf spring 6b.

According to a preferred embodiment, between the first connection region 11 and the second connection region 12 there is a connecting joint 13.

In particular, the connecting joint 13 is adapted to provide an interlocking coupling in order to lock mutual translation and rotation between the first connection region 11 and the second connection region 12.

Conveniently, the connecting joint 13 comprises two fastening elements 21 a and 21b, which are extended on a plane of arrangement that is substantially parallel to the plane of arrangement of at least one iron lamina that constitutes the first leaf spring 6a with which they are associated.

The first leaf spring 6a can comprise multiple iron laminas.

In this case, the two fastening elements 21a and 21 b are extended on a plane of arrangement that is substantially parallel to the plane of arrangement of the iron laminas that constitute the first leaf spring 6a with which they are associated.

The fastening elements 21 a and 21 b can be moved mutually closer, for example by means of perimetric screws and nuts 22, in order to fasten rigidly the portion of the first leaf spring 6a that is interposed between them and defines the first connection region 11.

The fastening elements 21 a and 21b are connected, by way of the interposition of screw-type tension members 24, to a plate 23 that lies on a plane that is substantially perpendicular to the planes of arrangement of the fastening elements 21a and 21b and is parallel to the iron lamina or laminas that constitute the second leaf spring 6b.

The second connection region 12 is thus fastened between the plate 23 and the head portion of the first portion 11 defined on the first leaf spring 6a.

Preferably, the lamina of the second leaf spring 6b that is opposite the one arranged adjacent to the plate 23 rests against the edges of the fastening elements 21a and 21b arranged toward the plate 23.

The first leaf spring 6a defines at least one first connection portion 14 that is connected rigidly to the fixed frame 2.

The second leaf spring 6b comprises at least one second connection portion 15 that is connected rigidly to the platelike body 3.

Preferably, the suspension device 5 comprises two front suspensions 5b and two rear suspensions 5a that are arranged mutually side by side.

As shown in the figures, one of the directions of extension, for example the first direction of extension 100, comprises a substantially vertical direction, while the other direction of extension (for example the second direction of extension 101) is constituted by a substantially horizontal direction.

Conveniently, the first connection portion 14 comprises a pair of fastening plates 16a, 16b.

The two fastening plates 16a and 16b are extended on a plane of arrangement that is substantially parallel to the plane of arrangement of the iron laminas that constitute the first leaf spring 6a with which they are associated.

The two fastening plates 16a and 16b can be moved mutually closer, for example by means of perimetric nuts and screws, in order to fasten rigidly the portion of the first leaf spring 6a that is interposed between them and defines the first connection portion 14.

Means such as screws 17 for fixing the fastening plates 16a, 16b to the fixed frame 2 are furthermore provided.

By way of example, the two fastening plates 16a and 16b can be connected rigidly to a supporting plate 18 that can be connected, by way of the fixing means 17, to the fixed frame 2 and in particular to the footing 2a.

Conveniently, the second connection portion 15 comprises a pair of fastening plates 16a, 16b.

The two fastening plates 16a and 16b are extended on a plane of arrangement that is substantially parallel to the plane of arrangement of the iron laminas that constitute the second leaf spring 6b with which they are associated.

The two fastening plates 16a and 16b can be moved mutually closer, for example by means of screws 19 and perimetric nuts, in order to fasten rigidly the portion of the second leaf spring 6b that is interposed between them and defines the second connection portion 15.

Means 17 for fixing the fastening plates 16a, 16b to the platelike body 3 by means of screws are furthermore provided.

Advantageously, the vibrating assembly 4 comprises a motorized vibrator 4a that is associated with the platelike body 3 and advantageously with an engagement portion that is integral with the platelike body 3.

Nothing forbids the vibrating assembly 4 from being constituted by different devices, such as for example a vibrating device with an eccentric element.

Conveniently, such engagement portion is arranged in a substantially central position region along the longitudinal extension of the platelike body 3, with respect to the position for fixing to the platelike body 3 the second connection portions 15 of the suspensions 5a and 5b.

Preferably, the rotation frequency of the motorized vibrator 4 is comprised between 85% and 95% or between 105% and 125% of the resonance frequency of the first leaf spring 6a and of the second leaf spring 6b.

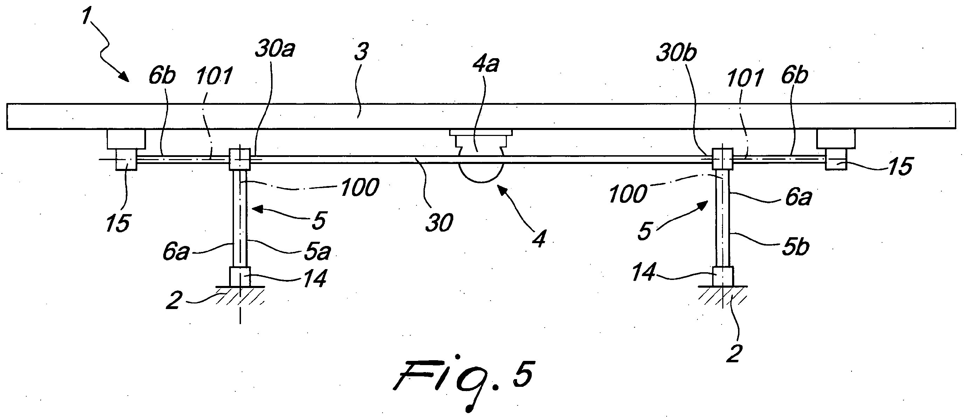

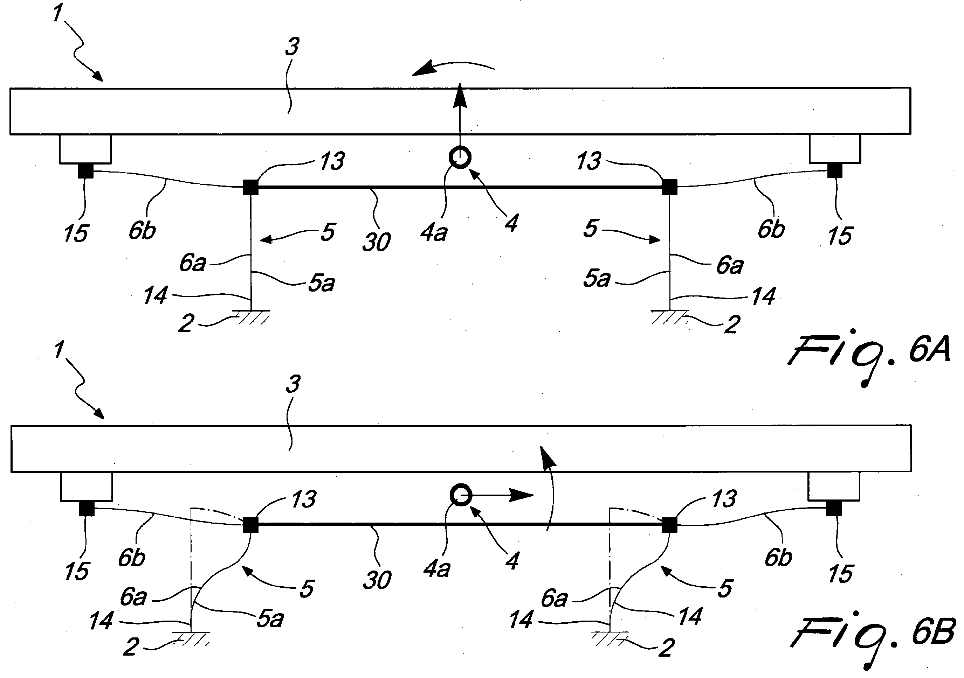

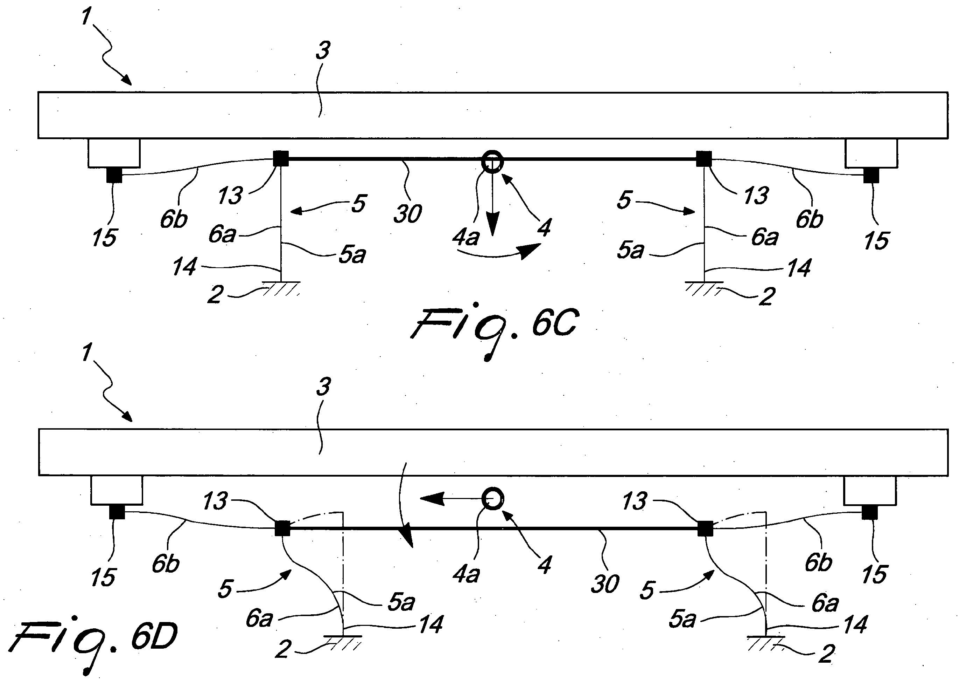

With particular reference to the embodiment shown in Figures 5 and 6, the two suspensions 5a 5be can be mutually connected by means of at least one stiffening crossmember 30.

Advantageously, the stiffening crossmember is connected rigidly at its end portions 30a and 30b to a respective connecting joint 13.

The stiffening crossmember 30 is extended substantially parallel to the direction of longitudinal extension of the platelike body 3.

Use of a vibrating plate 1 according to the invention is evident from what has been described above.

By rotating the motorized vibrator 4a at a rotation rate that is close but lower than or greater than the resonance frequency of the first leaf spring 6a and of the second leaf spring 6b, an optimum vibration of the platelike body 3 is achieved.

In this regard, it has been found that it is particularly advantageous to use suspensions 5a and 5b in which the resonance frequency of the first leaf spring 6a is substantially similar to the resonance frequency of the second leaf spring 6b in order to provide transport trays and screening trays.

If instead one wishes to provide drying trays and roasting trays, it is convenient to use suspensions 5a, 5b in which the first leaf spring 6a (the one extended along a vertical direction) has a lower resonance frequency than the second leaf spring 6b (which has a horizontal axis of extension).

In practice it has been found that the invention has achieved the intended aim and objects in all of the embodiments.

In particular, the invention, by using vertical and horizontal leaf springs that are joined directly, allows to provide a bidirectional vibrating plate by using a fixed footing and a single movable frame, differently from known devices that also require an intermediate movable frame.

The assembly of the vibrating assembly uses a rotational method but, thanks to the particularities of the invention, the vibrating plate does not require a descending tilt, allowing the advancement of the product even with the platelike body arranged horizontally.

In practice, the materials used, as well as the contingent shapes and dimensions, may be any according to requirements and to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A vibrating plate (1) comprising a fixed frame (2) that supports at least one platelike body (3) and is associated with a vibrating assembly (4), a suspension device (5) being interposed between said fixed frame (2) and said at least one platelike body (3) and comprising at least two suspensions (5a, 5b), said at least two suspensions (5a, 5b) comprising respectively a first leaf spring (6a), which lies along a first direction of extension (100), and a second leaf spring (6b), which is extended along a second direction of extension (101) that is substantially perpendicular to said first direction of extension, said first leaf spring and said second leaf spring (6a, 6b) being mutually connected rigidly and directly to each other and being connected respectively to said fixed frame (2) and to said platelike body (3), said first leaf spring (6a) having a first connection region (11) connected to a second connection region (12) defined on said second leaf spring (6b), a connecting joint (13) being provided between said first connection region (11) and said second connection region (12) and being adapted to provide an interlocking coupling to block mutual translation and mutual rotation between said first connection region (11) and said second connection region (12), the vibrating plate (1) being **characterized in that** said connecting joint (13) comprises two fastening elements (21 a, 21b) that are extended on a plane of arrangement that is substantially parallel to the plane of arrangement of at least one iron lamina that constitutes said first leaf spring (6a) with which they are associated and can be moved mutually closer to fasten rigidly the portion of the first leaf spring (6a) that is interposed between them and defines said first connection region (11), said fastening elements (21 a, 21 b) being connected to a plate (23) that lies on a plane that is parallel to at least one iron lamina that constitutes said second leaf spring (6b) in order to fasten said second connection region (12) between said plate (23) and the head portion of said first portion (11) defined on said first leaf spring (6a).

2. The plate (1) according to claim 1, **characterized in that** said first leaf spring (6a) comprises at least one first connection portion (14) that is connected rigidly to said fixed frame (2).

3. The plate (1) according to one or more of the preceding claims, **characterized in that** said second leaf spring (6b) comprises at least one second connection portion (15) that is connected rigidly to said platelike body (3).

4. The plate (1) according to one or more of the preceding claims, **characterized in that** said first leaf spring (6a) and said second leaf spring (6b) comprise multiple laminas.

5. The plate (1) according to one or more of the preceding claims, **characterized in that** said suspension device comprises two front suspensions (5b) and two rear suspensions (5a) that are arranged mutually side by side.

6. The plate (1) according to one or more of the preceding claims, **characterized in that** one of said directions of extension (100) comprises a substantially vertical direction and the other one (101) of said directions of extension comprises a substantially horizontal direction.

7. The plate (1) according to one or more of the preceding claims, **characterized in that** said vibrating assembly (4) comprises a motorized vibrator (4a) or an eccentric vibration device associated with said platelike body (3).

8. The plate (1) according to one or more of the preceding claims, **characterized in that** the rotation frequency of said motorized vibrator (4a) is comprised between 85% and 95%, or between 105% and 125%, of the resonance frequency of said first leaf spring (6a) and of said second leaf spring (6b).

9. The plate (1) according to one or more of the preceding claims, **characterized in that** it comprises at least one stiffening crossmember (30) for connection between two suspensions (5a, 5b).

10. The plate (1) according to one or more of the preceding claims, **characterized in that** said stiffening crossmember (30) is connected rigidly at its end portions (30a, 30b) to a connecting joint (13) of a respective suspension (5a, 5b).

## Patentansprüche

1. Eine vibrierende Platte (1), die einen festen Rahmen (2) umfasst, welcher mindestens einen plattenähnlichen Körper (3) trägt und mit einem Vibrieraufbau (4) verbunden ist, wobei eine Aufhängevorrichtung (5) zwischen dem festen Rahmen (2) und dem mindestens einen plattenähnlichen Körper (3) angeordnet ist und mindestens zwei Aufhängungen (5a, 5b) umfasst, wobei die mindestens zwei Aufhängungen (5a, 5b) eine erste Blattfeder (6a) umfassen, die entlang einer ersten Erstreckungsrichtung (100) verläuft, und eine zweite Blattfeder (6b), die entlang einer zweiten Erstreckungsrichtung (101) verläuft und im Wesentlichen senkrecht zu der ersten Erstreckungsrichtung ist, wobei die erste Blattfeder und die zweite Blattfeder (6a, 6b) starr und direkt miteinander verbunden sind und mit dem festen Rahmen (2) und dem plattenähnlichen Körper (3) verbunden sind, wobei die erste Blattfeder (6a) einen ersten Verbindungsabschnitt (11) hat, der mit einem zweiten Verbindungsabschnitt (12) verbunden ist, welcher an der zweiten Blattfeder (6b) bestimmt ist, wobei ein Verbindungspunkt (13) zwischen dem ersten Verbindungsabschnitt (11) und dem zweiten Verbindungsabschnitt (12) bereitgestellt und ausgebildet ist, um eine Verblockungskopplung bereitzustellen, um wechselseitige Translations- und Rotationsbewegungen zwischen dem ersten Verbindungsabschnitt (11) und dem zweiten Verbindungsabschnitt (12) zu blockieren, wobei die vibrierende Platte (1) **dadurch gekennzeichnet ist, dass** der Verbindungspunkt (13) zwei Befestigungselemente (21a, 21b) umfasst, die auf einer Anordnungsebene verlängert sind, welche im Wesentlichen parallel zur Anordnungsebene mindestens eines Eisenplättchens ist, das die erste Blattfeder (6a) bildet, mit der sie verbunden sind, und näher zueinander bewegt werden können, um den Abschnitt der ersten Blattfeder (6a) starr zu befestigen, der sich zwischen ihnen befindet und den ersten Verbindungsabschnitt (11) bestimmt, wobei die Befestigungselemente (21a, 21b) mit einer Platte (23) verbunden sind, die auf einer Ebene liegt, welche parallel zu mindestens einem Eisenplättchen ist, das die zweite Blattfeder (6b) bildet, um den zweiten Verbindungsabschnitt (12) zwischen der Platte (23) und dem Kopfabschnitt des ersten Abschnitts (11) zu befestigen, der an der ersten Blattfeder (6a) bestimmt ist.

2. Die Platte (1) gemäß Anspruch 1, **dadurch gekennzeichnet, dass** die erste Blattfeder (6a) mindestens einen ersten Verbindungsabschnitt (14) umfasst, der starr mit dem festen Rahmen (2) verbunden ist.

3. Die Platte (1) gemäß einem oder mehreren der obigen Ansprüche, **dadurch gekennzeichnet, dass** die zweite Blattfeder (6b) mindestens einen zweiten Verbindungsabschnitt (15) umfasst, der starr mit dem platten-ähnlichen Körper (3) verbunden ist.

4. Die Platte (1) gemäß einem oder mehreren der obigen Ansprüche, **dadurch gekennzeichnet, dass** die erste Blattfeder (6a) und die zweite Blattfeder (6b) mehrere Plättchen umfassen.

5. Die Platte (1) gemäß einem oder mehreren der obigen Ansprüche, **dadurch gekennzeichnet, dass** die Aufhängevorrichtung zwei vordere Aufhängungen (5b) und zwei hintere Aufhängungen (5a) umfasst, die nebeneinander angeordnet sind.

6. Die Platte (1) gemäß einem oder mehreren der obigen Ansprüche, **dadurch gekennzeichnet, dass** eine der Erstreckungsrichtungen (100) eine im Wesentlichen vertikale Richtung umfasst und die andere (101) der Erstreckungsrichtungen eine im Wesentlichen horizontale Richtung umfasst.

7. Die Platte (1) gemäß einem oder mehreren der obigen Ansprüche, **dadurch gekennzeichnet, dass** der Vibrieraufbau (4) einen motorisierten Rüttler (4a) oder eine exzentrische Vibrationsvorrichtung umfasst, die mit dem plattenähnlichen Körper (3) verbunden ist.

8. Die Platte (1) gemäß einem oder mehreren der obigen Ansprüche, **dadurch gekennzeichnet, dass** die Rotationsfrequenz des motorisierten Rüttlers (4a) zwischen 85% und 95% oder zwischen 105% und 125% der Eigenfrequenz der ersten Blattfeder (6a) und der zweiten Blattfeder (6b) beträgt.

9. Die Platte (1) gemäß einem oder mehreren der obigen Ansprüche, **dadurch gekennzeichnet, dass** sie mindestens einen Versteifungs-Querträger (30) zur Verbindung zwischen zwei Aufhängungen (5a, 5b) umfasst.

10. Die Platte (1) gemäß einem oder mehreren der obigen Ansprüche, **dadurch gekennzeichnet, dass** der Versteifungs-Querträger (30) an seinen Endabschnitten (30a, 30b) starr mit einem Verbindungspunkt (13) einer jeweiligen Aufhängung (5a, 5b) verbunden ist.

## Revendications

1. Plaque vibrante (1) comprenant un bâti fixe (2) qui supporte au moins un corps similaire à une plaque (3) et qui est associé à un ensemble vibrant (4), un dispositif de suspension (5) étant interposé entre ledit bâti fixe (2) et ledit ou lesdits corps similaires à une plaque (3), et comprenant au moins deux suspensions (5a, 5b), lesdites au moins deux suspensions (5a, 5b) comprenant respectivement un premier ressort à lames (6a), qui se situe le long d'une première direction d'extension (100), et un second ressort à lames (6b), qui s'étend le long d'une seconde direction d'extension (101) qui est sensiblement perpendiculaire à ladite première direction d'extension, ledit premier ressort à lames et ledit second ressort à lame (6a, 6b) étant mutuellement connectés de manière rigide et directement l'un à l'autre, et étant connectés respectivement audit bâti fixe (2) et audit corps similaire à une plaque (3), ledit premier ressort à lames (6a) présentant une première région de connexion (11) connectée à une seconde région de connexion (12) définie sur ledit second ressort à lame (6b), un joint de connexion (13) étant disposé entre ladite première région de connexion (11) et ladite seconde région de connexion (12), et étant adapté de façon à fournir un accouplement de blocage afin de bloquer une translation mutuelle et une rotation mutuelle entre ladite première région de connexion (11) et ladite seconde région de connexion (12), la plaque vibrante (1) étant **caractérisée en ce que** ledit joint de connexion (13) comprend deux éléments de fixation (21a, 21b) qui s'étendent sur un plan d'agencement qui est sensiblement parallèle au plan d'agencement d'une lame de fer au moins qui constitue ledit premier ressort à lame (6a) auquel ils sont associés, et qui peuvent être déplacés mutuellement plus près de façon à fixer de manière rigide la partie du premier ressort à lames (6a) qui est interposée entre eux, et qui définit ladite première région de connexion (11), lesdits éléments de fixation (21 a, 21 b) étant connectés à une plaque (23) qui se situe sur un plan qui est parallèle à une lame de fer au moins qui constitue ledit second ressort à lames (6b) de façon à fixer ladite seconde région de connexion (12) entre ladite plaque (23) et la partie avant de ladite première partie (11) définie sur ledit premier ressort à lames (6a).

2. Plaque (1) selon la revendication 1, **caractérisée en ce que** ledit premier ressort à lames (6a) comprend au moins une première partie de connexion (14) qui est connectée de manière rigide audit bâti fixe (2).

3. Plaque (1) selon une ou plusieurs des revendications précédentes, **caractérisée en ce que** ledit second ressort à lames (6b) comprend au moins une seconde partie de connexion (15) qui est connectée de manière rigide audit corps similaire à une plaque (3).

4. Plaque (1) selon une ou plusieurs des revendications précédentes, **caractérisée en ce que** ledit premier ressort à lames (6a) et ledit second ressort à lames (6b) comprennent de multiples lames.

5. Plaque (1) selon une ou plusieurs des revendications précédentes, **caractérisée en ce que** ledit dispositif de suspension comprend deux suspensions avant (5b) et deux suspensions arrière (5a) qui sont agencées mutuellement côte à côte.

6. Plaque (1) selon une ou plusieurs des revendications précédentes, **caractérisée en ce que** l'une desdites directions d'extension (100) comprend une direction sensiblement verticale, et l'autre (101) desdites directions d'extension comprend une direction sensiblement horizontale.

7. Plaque (1) selon une ou plusieurs des revendications précédentes, **caractérisée en ce que** ledit ensemble vibrant (4) comprend un dispositif vibrant motorisé (4a) ou un dispositif vibrant excentrique associé audit corps similaire à une plaque (3).

8. Plaque (1) selon une ou plusieurs des revendications précédentes, **caractérisée en ce que** la fréquence de rotation dudit dispositif vibrant motorisé (4a) est comprise entre 85 % et 95 %, ou entre 105 % et 125 %, de la fréquence de résonance dudit premier ressort à lames (6a) et dudit second ressort à lames (6b).

9. Plaque (1) selon une ou plusieurs des revendications précédentes, **caractérisée en ce qu'**elle comprend au moins un élément transversal de raidissement (30) destiné à établir une connexion entre deux suspensions (5a, 5b).

10. Plaque (1) selon une ou plusieurs des revendications précédentes, **caractérisée en ce que** ledit élément transversal de raidissement (30) est connecté de manière rigide, au niveau de ses parties d'extrémité (30a, 30b), à un joint de connexion (13) d'une suspension respective (5a, 5b).
